# EUROPEAN PATENT SPECIFICATION

(11) **EP 3 594 564 B1**
(45) Date of publication and mention of the grant of the patent: **05.05.2021**
(21) Application number: 19184855.5
(22) Date of filing: 08.07.2019
(51) Int. Cl.: F21S 41/33, F21S 41/365, F21S 41/148, B62J 6/02

(54) **LIGHTING DEVICE FOR VEHICLE**
BELEUCHTUNGSVORRICHTUNG FÜR FAHRZEUGE
DISPOSITIF D'ÉCLAIRAGE POUR VÉHICULE

(30) Priority: 13.07.2018 JP 2018133076
(43) Date of publication of application: 15.01.2020
(73) Proprietor: Honda Motor Co., Ltd., Tokyo 107-8556 (JP)
(72) Inventor: KATO, Takaaki, Saitama 351-0193 (JP); SHIINA, Hirotsugu, Saitama 351-0193 (JP); OZAWA, Takayuki, Saitama 351-0193 (JP); ASHIHARA, Eiji, Minato-ku, Tokyo 105-6024 (JP)
(74) Representative: Weickmann & Weickmann PartmbB

(56) References cited:
- EP-A2- 2 184 532
- WO-A1-2012/070169
- TW-A- 201 834 891
- US-A1- 2015 338 047
- US-B2- 9 347 636

## Description

### BACKGROUND OF THE INVENTION

### Field of the Invention

The present invention relates to a lighting device for a vehicle.

### Description of Related Art

In the related art, there is a lighting device for a vehicle using a light emitting diode (LED) as a light source (for example, see Japanese Unexamined Patent Application, First Publication No. 2017-204343). Japanese Unexamined Patent Application, First Publication No. 2017-204343 discloses a headlamp apparatus for a vehicle including a light source and a reflector section having a reflecting surface configured to reflect light emitted from the light source forward, and the light source is an LED configured to emit light in one direction that is previously determined.

US 9 347 636 B2 shows a lighting device for a vehicle according to the preamble part of claim 1.

### SUMMARY OF THE INVENTION

Incidentally, since an LED cannot radiate light toward at least a back side of a mounting substrate, light having higher directivity than that of a halogen lamp or the like used as a light source of a lighting device for a vehicle in the related art is radiated. For this reason, when an LED is used as the light source of a lighting device for a vehicle, a portion irradiated with light from the light source is narrowed in comparison with the lighting device for a vehicle in the related art. For example, like the headlamp apparatus disclosed in Japanese Unexamined Patent Application, First Publication No. 2017-204343, when an LED light source is disposed downward, light is not radiated to a portion above the LED light source. Accordingly, the lighting device for a vehicle has a dark impression as a whole, and there is room for improvement in design and visibility from the outside. In addition, when a light source for improving visibility is added, component costs are increased.

It is an object of the present invention to provide a lighting device for a vehicle in which improvement in design and visibility from the outside is achieved while an increase in component costs is minimized.

The present invention provides a lighting device for a vehicle according to claim 1.
(1) The lighting device for a vehicle according to an aspect of the present invention includes an LED light source; a substrate on which the LED light source is mounted; and a reflecting member configured to reflect light radiated from the LED light source, wherein the reflecting member includes: a reflector for a headlight that is provided in a radiation direction of the LED light source with respect to the LED light source and that has a first reflecting surface configured to reflect light radiated from the LED light source toward outside; a second reflecting surface that is provided in the radiation direction of the LED light source with respect to the LED light source and that is configured to reflect light radiated from the LED light source, the second reflecting surface being separately provided from the first reflecting surface; and a third reflecting surface that faces a side opposite to the LED light source and that is configured to reflect light reflected by the second reflecting surface toward outside.
   According to the aspect of the above-mentioned (1), the light leaked from the first reflecting surface among the light radiated from the LED light source can be reflected by the second reflecting surface and can be radiated to the third reflecting surface. Accordingly, the third reflecting surface to which the light from the LED light source is not directly radiated is lit without facing the LED light source. Accordingly, the lighting device for a vehicle can be lit in a wider range without providing a new light source. Accordingly, improvement of design of the lighting device for a vehicle and visibility from the outside can be achieved while an increase in component costs is minimized.
(2) In the aspect of the above-mentioned (1), the second reflecting surface may face the LED light source and the third reflecting surface, and the third reflecting surface may face the second reflecting surface and a front side.
   According to the aspect of the above-mentioned (2), the second reflecting surface can reflect the light from the LED light source to the third reflecting surface, and the third reflecting surface can reflect the light from the second reflecting surface forward. Accordingly, it is possible to provide the lighting device for a vehicle capable of exhibiting the above-mentioned effects as the headlight.
(3) In the aspect of the above-mentioned (1) or (2), the LED light source includes a light source for a high beam and a light source for a low beam, the light source for a high beam is disposed at a central section in a vehicle width direction, the light source for a low beam is disposed further outward in the vehicle width direction than the light source for a high beam, and the second reflecting surface is disposed within a radiation range of light radiated from the light source for a low beam.
   According to the aspect of the above-mentioned (3), in comparison with the case in which the light source for a low beam is disposed further inward in the vehicle width direction than the light source for a high beam, a radiation range of the light source for a low beam can be easily widen toward an outer side than the first reflecting surface. For this reason, a degree of design freedom in installation of the second reflecting surface can be improved. Further, since the third reflecting surface is lit by light of a low beam that is always turned on, design of the lighting device for a vehicle and visibility from the outside can be consistently improved.
(4) In the aspect of any one of the above-mentioned (1) to (3), the reflecting member may include an extension that is disposed around the reflector for a headlight and that has the second reflecting surface.
   According to the aspect of the above-mentioned (4), since the second reflecting surface is provided on the extension disposed around the reflector for a headlight, the light that leaks from the reflector for a headlight can be reflected by the second reflecting surface. Accordingly, the third reflecting surface can be lit without light distribution of the headlight being influenced by reflection of the reflector for a headlight.
(5) In the aspect of any one of the above-mentioned (1) to (4), the LED light source may include a light source for a low beam, and the third reflecting surface may be provided in a range that overlaps the first reflecting surface in an upward and downward direction when seen in a front view.
   According to the aspect of the above-mentioned (5), since the third reflecting surface is provided in the vicinity of the light source for a low beam, an increase in an incidence angle and a reflection angle when light is reflected from the second reflecting surface toward the third reflecting surface can be minimized. Accordingly, the light radiated to the second reflecting surface can be efficiently reflected toward the third reflecting surface.
   Accordingly, the third reflecting surface can be strongly lit, and design of the lighting device for a vehicle and visibility from the outside can be improved.
(6) In the aspect of any one of the above-mentioned (1) to (5), the third reflecting surface may be a diffusing and reflecting surface configured to diffuse and reflect light.
   According to the aspect of the above-mentioned (6), in comparison with the case in which the third reflecting surface is a mirror surface that performs specular reflection of light, the third reflecting surface can reflect the light from the second reflecting surface to a wider range. Accordingly, visibility from the outside of the lighting device for a vehicle can be improved.
(7) In the aspect of any one of the above-mentioned (1) to (6), the third reflecting surface may have a twisted shape.
   According to the aspect of the above-mentioned (7), in comparison with the case in which the third reflecting surface is formed in a flat surface shape, the third reflecting surface can reflect the light from the second reflecting surface to a wider range. Accordingly, visibility from the outside of the lighting device for a vehicle can be improved.
(8) In the aspect of any one of the above-mentioned (1) to (6), the third reflecting surface may have a concave shape.
   According to the aspect of the above-mentioned (8), in comparison with the case in which the third reflecting surface is formed in a flat surface shape, the third reflecting surface can reflect the light from the second reflecting surface to a wider range. Accordingly, visibility from the outside of the lighting device for a vehicle can be improved.
(9) In the aspect of any one of the above-mentioned (1) to (8), the lighting device for a vehicle further includes a light shielding section disposed between the LED light source and the first reflecting surface, wherein a window section through which light radiated from the LED light source passes toward the first reflecting surface is formed in the light shielding section, and a notch through which light radiated from the LED light source passes toward the second reflecting surface is formed in the window section.

According to the aspect of the present invention, light can be radiated to the second reflecting surface by the notch while the radiation range of the light radiated to the first reflecting surface is defined by the window section. Accordingly, the third reflecting surface can be reliably lit while the road surface is suppressed from being directly illuminated by the leaked light. Accordingly, it is possible to provide the lighting device for a vehicle in which the radiation range is appropriately set and improvement in design and visibility from the outside is achieved.

According to the aspect of the present invention, it is possible to provide a lighting device for a vehicle in which improvement in design and visibility from the outside is achieved while an increase in component costs is suppressed.

### BRIEF DESCRIPTION OF THE DRAWINGS

FIG. 1 is a right side view showing a motorcycle of an embodiment.
FIG. 2 is an exploded perspective view of a headlight of the embodiment when seen from a right front side.
FIG. 3 is a perspective view of a portion of an LED module and a reflecting member of the embodiment when seen from below.
FIG. 4 is a perspective view of the reflecting member of the embodiment when seen from a left front side.
FIG. 5 is a front view showing the LED module and the reflecting member of the embodiment.
FIG. 6 is a plan view showing the reflecting member of the embodiment.
FIG. 7 is a front view showing a radiation range of light from a light source for a low beam of the embodiment.
FIG. 8 is a perspective view showing a part of a reflecting member of a first variant of the embodiment.
FIG. 9 is a perspective view showing a part of a reflecting member of a second variant of the embodiment.

### DETAILED DESCRIPTION OF THE INVENTION

Hereinafter, an embodiment of the present invention will be described with reference to the accompanying drawings. Further, directions of forward and rearward, upward and downward, leftward, rightward, and so on, in the following description are the same as directions in a vehicle described below unless the context clearly indicates otherwise. That is, an upward and downward direction coincides with a vertical direction, and a leftward/rightward direction coincides with a vehicle width direction. In addition, in the drawings used in the following description, an arrow UP indicates an upward direction with respect to a vehicle, an arrow FR indicates a forward direction with respect to the vehicle and an arrow LH indicates a leftward direction with respect to the vehicle.

First, a schematic configuration of a saddle riding vehicle as a whole, on which a lighting device for a vehicle of the embodiment is mounted, will be described.

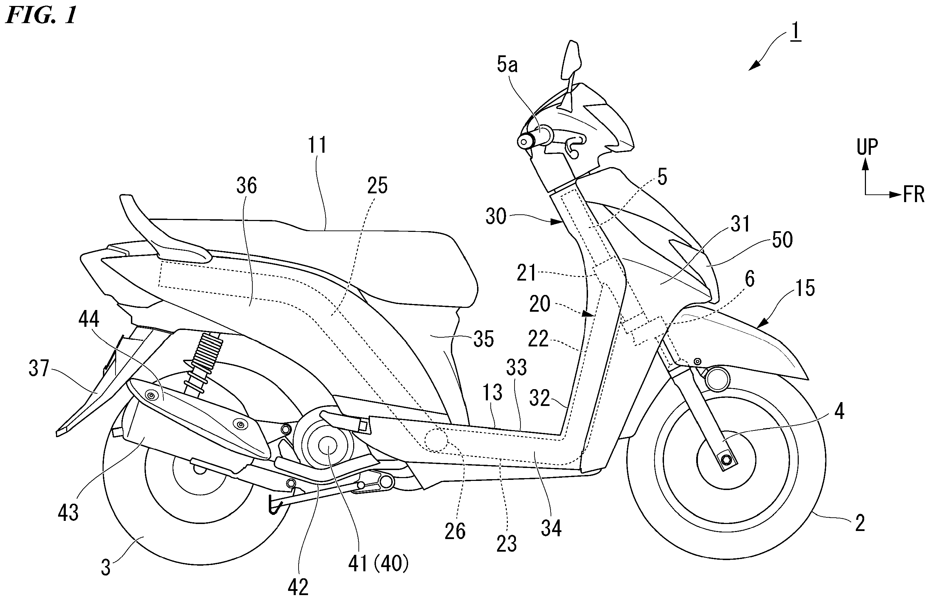

FIG. 1 is a right side view showing a motorcycle of the embodiment.

As shown in FIG. 1, in the embodiment, a scooter type motorcycle 1 will be described as an example of the saddle riding vehicle. The motorcycle 1 includes a step floor 13 on which an occupant who sits on a seat 11 puts his/her legs. The motorcycle 1 includes a front wheel 2, a rear wheel 3, a vehicle body frame 20, the seat 11, a vehicle body cover 30, a power unit 40 and a headlight 50 (a lighting device for a vehicle).

The front wheel 2 is axially supported by lower end portions of a pair of left and right front forks 4. Upper end portions of the pair of front forks 4 are connected by a bottom bridge 6 extending in a vehicle width direction. The front forks 4 are steerably supported by a front end of the vehicle body frame 20 fixed to the bottom bridge 6 via a steering stem 5. A bar handle 5a for steering is attached to an upper section of the steering stem 5. A front fender 15 is attached to the front forks 4.

The vehicle body frame 20 is formed by integrally coupling a plurality of kinds of steel members through welding, fastening, or the like. The vehicle body frame 20 includes a head pipe 21, a down frame 22, a pair of left and right lower frames 23, a pair of left and right seat frames 25 and a cross member 26. The head pipe 21 is provided on a front end of the vehicle body frame 20. The head pipe 21 steerably supports steering system parts including the front wheel 2. The steering stem 5 is inserted through the head pipe 21. The down frame 22 extends downward and rearward from the head pipe 21. The pair of lower frames 23 horizontally extend rearward from a lower end portion of the down frame 22. The pair of seat frames 25 extend rearward and upward from rear end portions of the lower frames 23. The pair of seat frames 25 support the seat 11 from below. The cross member 26 extends in the vehicle width direction and is coupled to rear end portions of the pair of lower frames 23.

The vehicle body cover 30 covers the vehicle body frame 20 or the like. The vehicle body cover 30 is formed of, for example, a synthetic resin. The vehicle body cover 30 includes a front cover 31, an inner cover 32, a floor board 33, a floor side cover 34, a rear cover 35, a rear side cover 36 and a rear fender 37. The front cover 31 covers the head pipe 21 and the down frame 22 from the front. The front cover 31 and the inner cover 32 constitute a leg shield configured to cover an occupant's legs from the front. The headlight 50 is attached to the front cover 31.

The inner cover 32 covers the head pipe 21 and the down frame 22 from behind. The floor board 33 is connected to a rear side of a lower end portion of the inner cover 32. The floor board 33 covers the lower frames 23 from above. The floor board 33 constitutes the step floor 13.

The pair of floor side covers 34 are provided on left and right sides, and connected below left and right edge portions of the floor board 33. Front end portions of the pair of floor side covers 34 are connected to a lower end portion of the front cover 31. The floor side covers 34 cover the lower frames 23 from an outer side in the vehicle width direction. The rear cover 35 is connected to a rear side of the floor board 33. The rear cover 35 covers the seat frames 25 from the front. The rear side cover 36 is connected to diagonally upper rear sides of rear end portions of the left and right floor side covers 34. The rear side cover 36 covers the seat frames 25 from an outer side in the vehicle width direction. The rear fender 37 extends rearward and downward from a rear end portion of the rear side cover 36. The rear fender 37 covers the rear wheel 3 from above and behind.

The power unit 40 is vertically swingably supported by a rear lower section of the vehicle body frame 20.

The power unit 40 includes an engine 41 that is an internal combustion engine, and an arm section (not shown) extending rearward from a left side of the engine 41 and configured to support the rear wheel 3 from a left side in a cantilever manner. The engine 41 is disposed in front of the rear wheel 3. An exhaust pipe 42 is connected to the engine 41.

The exhaust pipe 42 is curved after being extracted downward from a cylinder head of the engine 41 and then extends rearward. A rear end of the exhaust pipe 42 is connected to a muffler 43 disposed on a right side of the rear wheel 3. A muffler protector 44 configured to cover an outer surface of the muffler 43 from above is attached to an upper section of the muffler 43.

Next, the headlight 50 of the embodiment will be described in detail.

The headlight 50 is disposed in the front of the motorcycle 1 and configured to radiate light to a road surface.

The headlight 50 is disposed above the front fender 15 and disposed on a central section of a front surface of the front cover 31 in the vehicle width direction.

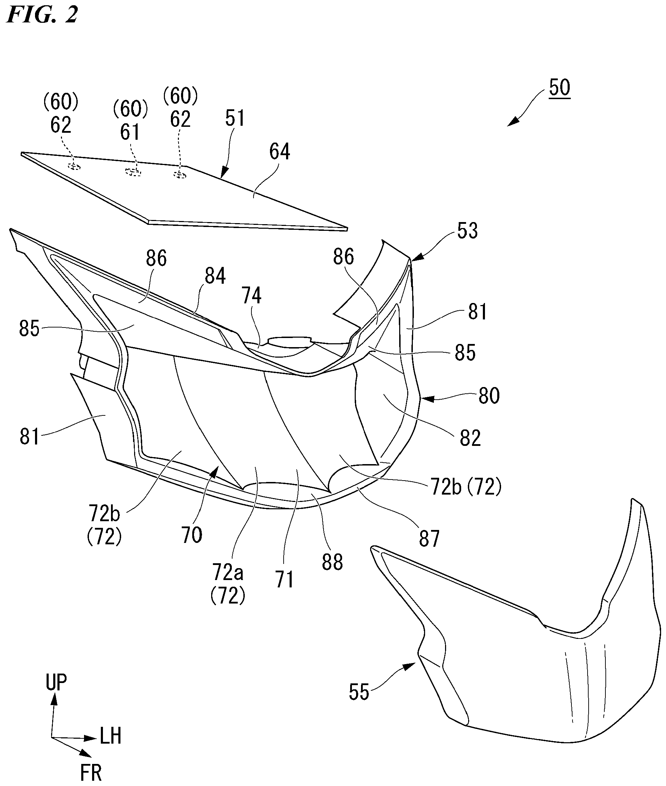

FIG. 2 is an exploded perspective view of the headlight of the embodiment when seen from a right front side.

As shown in FIG. 2, the headlight 50 includes an LED module 51 having an LED light source 60, a reflecting member 53 configured to reflect light radiated from the LED light source 60, and a lens 55 attached to the reflecting member 53.

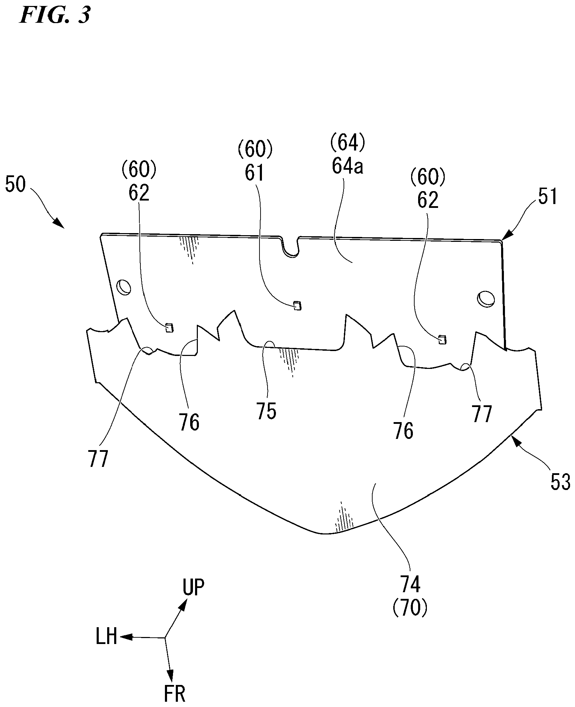

FIG. 3 is a perspective view showing portions of an LED module and a reflecting member of the embodiment from below.

As shown in FIG. 2 and FIG. 3, the LED module 51 includes the LED light source 60, and a substrate 64 on which the LED light source 60 is mounted. The substrate 64 is formed in a rectangular flat plate shape and disposed substantially horizontally. A lower surface of the substrate 64 serves as a mounting surface 64a on which the LED light source 60 is mounted. The LED light source 60 includes a light source 61 for a high beam and a pair of light sources 62 for low beams. The light source 61 for a high beam is disposed on a central section in the mounting surface 64a of the substrate 64 in the vehicle width direction so as to be located at a central section of the headlight 50 in the vehicle width direction. The pair of light sources 62 for low beams are disposed so that the light source 61 for a high beam is interposed from both sides in the vehicle width direction. That is, the pair of light sources 62 for low beams are disposed further outward in the vehicle width direction than the light source 61 for a high beam. The pair of light sources 62 for low beams are disposed in front of the light source 61 for a high beam. The LED light source 60 radiates light downward. The LED light source 60 radiates light that is diffused radially. For example, an optical axis of the LED light source 60 extends along a vertical line.

As shown in FIG. 2, the reflecting member 53 is formed in a concave shape that opens forward. The reflecting member 53 is formed of a member having a light shielding property, and an inner surface thereof is a reflecting surface. An opening in front of the reflecting member 53 is closed by the lens 55. The LED module 51 is disposed above the reflecting member 53, and the LED light source 60 is configured to radiate light into the reflecting member 53.

The reflecting member 53 includes a reflector 70 (a reflector for a headlight) and an extension 80 disposed around the reflector 70.

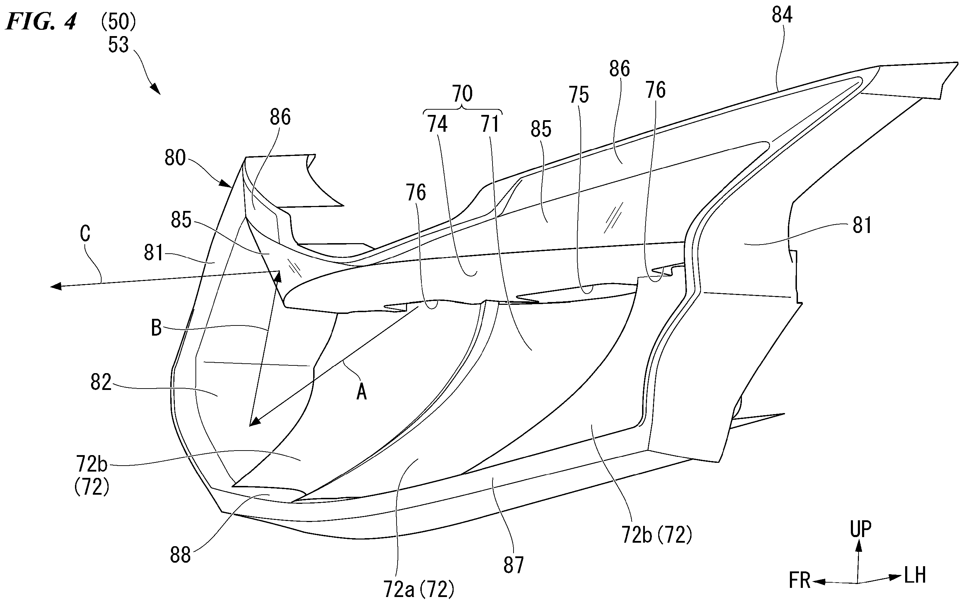

FIG. 4 is a perspective view showing the reflecting member of the embodiment from a left front side.

As shown in FIG. 4, the reflector 70 includes a reflector main body 71 and a top plate section 74 (a light shielding section). An upper surface of the reflector main body 71 is a first reflecting surface 72. The first reflecting surface 72 is provided inside the lens 55 (see FIG. 2) in a radiation direction (i.e., downward) of the LED light source 60 with respect to the LED light source 60 (see FIG. 3). The first reflecting surface 72 reflects light from the LED light source 60 forward. The first reflecting surface 72 reflects light from the LED light source 60 to the outside through the lens 55. The first reflecting surface 72 has a high beam reflecting surface 72a and a pair of low beam reflecting surfaces 72b.

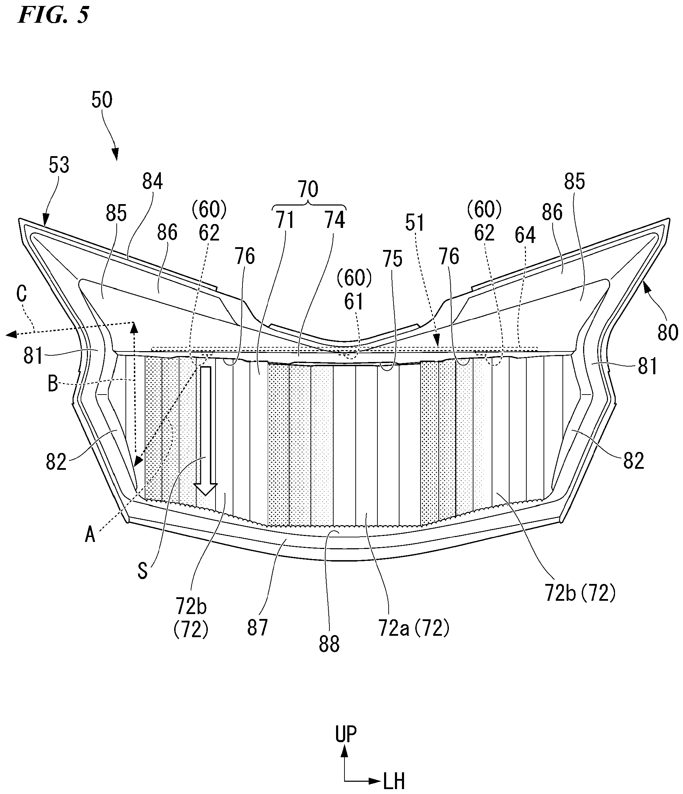

FIG. 5 is a front view showing the LED module and the reflecting member of the embodiment.

As shown in FIG. 4 and FIG. 5, the high beam reflecting surface 72a is disposed at a central section of the headlight 50 in the vehicle width direction and disposed below the light source 61 for a high beam when seen in a front view. The high beam reflecting surface 72a extends with a substantially constant width in the upward and downward direction when seen in a front view. The high beam reflecting surface 72a is formed to have a concave curved surface in which a central section in the vehicle width direction is recessed when seen in a front view. The high beam reflecting surface 72a extends forward as it goes downward from behind the light source 61 for a high beam. The high beam reflecting surface 72a extends in front of the light source 61 for a high beam. The high beam reflecting surface 72a is formed in a concave shape when seen in the vehicle width direction.

The pair of low beam reflecting surfaces 72b are disposed adjacent to the high beam reflecting surface 72a so that the high beam reflecting surface 72a is interposed from both sides in the vehicle width direction. That is, the pair of low beam reflecting surfaces 72b are disposed outside the high beam reflecting surface 72a in the vehicle width direction. The low beam reflecting surfaces 72b are disposed below the light sources 62 for low beams when seen in a front view. The low beam reflecting surfaces 72b extends in the upward and downward direction when seen in a front view. The low beam reflecting surfaces 72b are formed to have a concave curved surface in which a central section in the vehicle width direction is recessed when seen in a front view. The low beam reflecting surfaces 72b extend forward as they go downward from behind the light sources 62 for low beams. The low beam reflecting surfaces 72b extend in front of the light sources 62 for low beams. The low beam reflecting surfaces 72b are formed in a concave shape when seen in the vehicle width direction.

The top plate section 74 is disposed between the LED module 51 and the first reflecting surface 72 of the reflector main body 71. The top plate section 74 extends forward from an upper edge of the reflector main body 71. The top plate section 74 is provided substantially horizontally. A front edge of the top plate section 74 is formed such that a central section in the vehicle width direction protrudes forward. A window section 75 for a high beam through which light radiated from the light source 61 for a high beam passes and a pair of window sections 76 for low beams through which light radiated from the light sources 62 for low beams passes are formed on the top plate section 74.

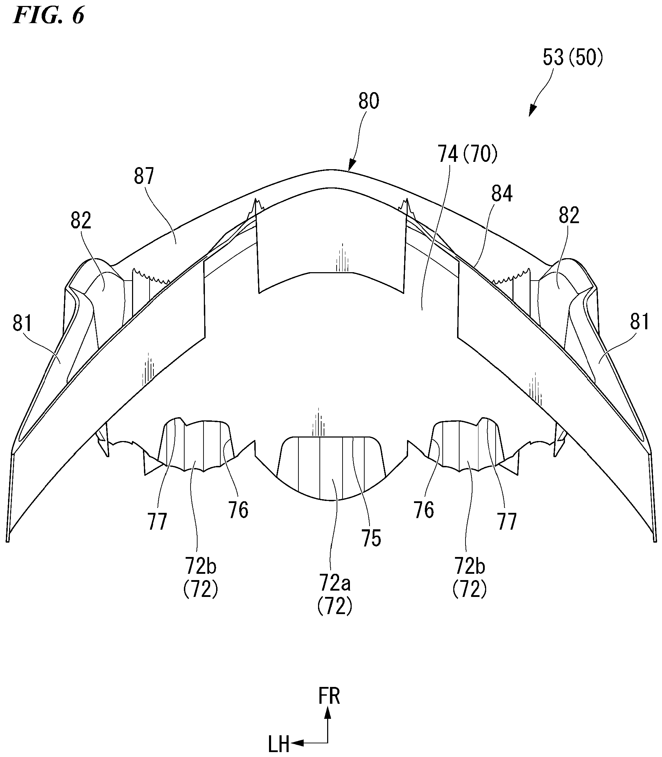

FIG. 6 is a plan view showing the reflecting member of the embodiment.

As shown in FIG. 3 and FIG. 6, the window section 75 for a high beam is provided below the light source 61 for a high beam. The window section 75 for a high beam passes through the top plate section 74. The window section 75 for a high beam is formed in a rectangular shape, and defines a radiation range of light from the light source 61 for a high beam while causing light radiated from the light source 61 for a high beam to pass therethrough toward the first reflecting surface 72.

The pair of window sections 76 for low beams are disposed below the light sources 62 for low beams. The window sections 76 for low beams pass through the top plate section 74. The window sections 76 for low beams are formed in a rectangular shape, and define a radiation range of light from the light sources 62 for low beams while causing light radiated from the light sources 62 for low beams to pass therethrough toward the first reflecting surface 72. Notches 77 that are cut out forward are formed in front end edges of the window sections 76 for low beams. The notches 77 finely adjust a radiation range of light from the light sources 62 for low beams while causing light radiated from the light sources 62 for low beams to pass therethrough toward a second reflecting surface 82 (see FIG. 4), which will be described below.

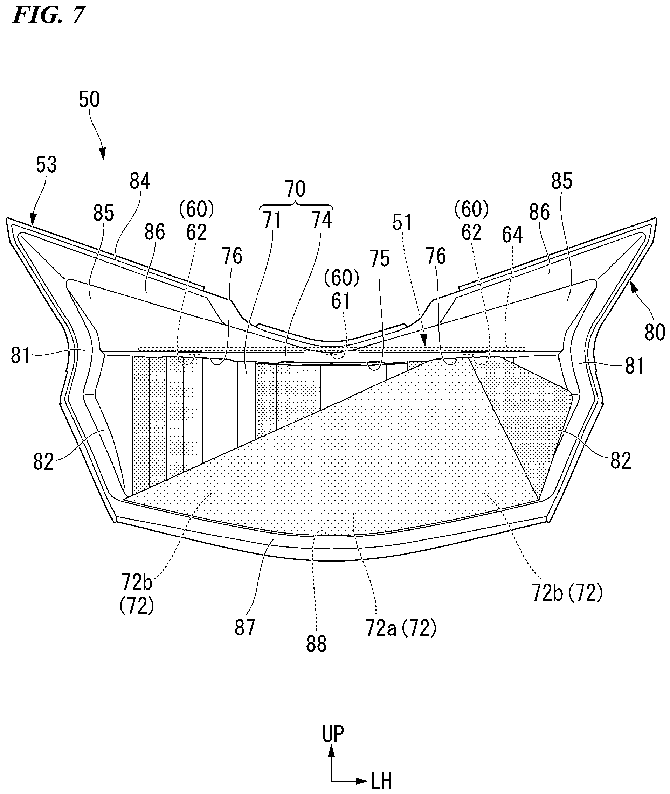

FIG. 7 is a front view showing a radiation range of light by a light source for a low beam of the embodiment.

As shown in FIG. 7, in the embodiment, light from the light sources 62 for low beams passing through the window sections 76 for low beams and the notches 77 (see FIG. 6) is spread to both sides in the vehicle width direction as it goes downward from above when seen in a front view. The light from the light sources 62 for low beams passing through the window sections 76 for low beams is radiated to substantially the entirety of one of the low beam reflecting surfaces 72b provided immediately therebelow, a lower section of the high beam reflecting surface 72a and a lower section of the other low beam reflecting surface 72b. The light from the light sources 62 for low beams passing through the notches 77 is radiated to the second reflecting surface 82 adjacent to the one of the low beam reflecting surfaces 72b.

As shown in FIG. 4, the extension 80 is a frame-shaped member configured to cover surroundings of the reflector 70. The extension 80 is formed in a trapezoidal shape when seen in a front view. The extension 80 includes a pair of frame side sections 81 provided at both sides of the reflector 70 in the vehicle width direction, a frame upper section 84 provided above the reflector 70, and a frame lower section 87 provided below the reflector 70. The extension 80 extends in front of the reflector 70. According to the configuration, a profile of the light reflected by the reflector 70 and radiated forward becomes clear.

As shown in FIG. 4 and FIG. 5, the frame side sections 81 have the second reflecting surfaces 82 provided separately from the first reflecting surface 72. The second reflecting surface 82 is provided inside the lens 55 (see FIG. 2) and on a lower section of a surface of the frame side sections 81 facing an inner side in the vehicle width direction. The second reflecting surface 82 is provided below the window sections 76 for low beams of the top plate section 74 in the radiation direction (i.e., below) of the LED light source 60 with respect to the LED light source 60. The second reflecting surface 82 is adjacent to the first reflecting surface 72 of the reflector 70 and extends forward from an outer edge of the first reflecting surface 72 of the reflector 70 in the vehicle width direction. The second reflecting surface 82 extends outward in the vehicle width direction as it goes upward from below. Further, the second reflecting surface 82 becomes a flat surface or a curved surface having a convex shape.

The second reflecting surface 82 faces the light sources 62 for low beams through the window sections 76 for low beams which is provided on the same side with the second reflecting surface 82 with respect to the central section of the headlight 50 in the vehicle width direction, among the pair of window sections 76 for low beams. The second reflecting surface 82 is disposed in a radiation range of light radiated from the light sources 62 for low beams (see FIG. 7). In addition, the second reflecting surface 82 faces a third reflecting surface 85, which will be described below. For example, a normal line of at least one arbitrary point in the second reflecting surface 82 is directed toward a direction which is between a direction oriented to the light sources 62 for low beams from the arbitrary point and a direction oriented to the third reflecting surface 85 from the arbitrary point.

The second reflecting surface 82 reflects light from the light sources 62 for low beams toward the third reflecting surface 85. More specifically, the second reflecting surface 82 reflects leaked light of main light S (see FIG. 5) radiated to the low beam reflecting surfaces 72b among the light from the light sources 62 for low beams toward the third reflecting surface 85. The second reflecting surface 82 serves as a diffusing and reflecting surface configured to diffuse and reflect light. The diffusing and reflecting surface is formed by performing light diffusion processing such as knurling, emboss processing, satin finishing, or the like. The second reflecting surface 82 can reflect the light from the light sources 62 for low beams toward the third reflecting surface 85 as shown by arrows A and B in FIGS. 4 and 5 because the second reflecting surface 82 faces the light sources 62 for low beams and the third reflecting surface 85.

The frame upper section 84 has the third reflecting surface 85. The third reflecting surface 85 is provided inside the lens 55. The third reflecting surface 85 is adjacent to a lower surface of the top plate section 74 and extends upward and forward from a front edge of the top plate section 74. Accordingly, the third reflecting surface 85 faces a side opposite to the LED light source 60. At least a part of the third reflecting surface 85 is provided above the light sources 62 for low beams and in a range overlapping the low beam reflecting surfaces 72b of the first reflecting surface 72 in the upward and downward direction when seen in a front view. The third reflecting surface 85 is divided into left and right sections with respect to a center of the frame upper section 84 in the vehicle width direction. Further, the third reflecting surface 85 may be connected to a center of the frame upper section 84 in the vehicle width direction.

The third reflecting surface 85 extends rearward as it goes outward from an inner side in the vehicle width direction to conform to a shape of the front edge of the top plate section 74. An outer end portion of the third reflecting surface 85 in the vehicle width direction is connected to an upper end portion of a surface of the frame side sections 81 facing an inner side in the vehicle width direction. The third reflecting surface 85 has a curved surface with a convex shape.

Half sections of the third reflecting surface 85 face the second reflecting surface 82 which is provided on the same side with the half sections of the third reflecting surface 85 with respect to a central section of the headlight 50 in the vehicle width direction, among a pair of second reflecting surfaces 82. In addition, the third reflecting surface 85 faces the front side. For example, a normal line of at least one arbitrary point in the third reflecting surface 85 is directed toward a direction which is between the direction oriented to the second reflecting surface 82 from the arbitrary point and the forward direction.

The third reflecting surface 85 reflects the light from the light sources 62 for low beams reflected by the second reflecting surface 82 forward. The third reflecting surface 85 reflects the light from the second reflecting surface 82 to the outside through the lens 55. The third reflecting surface 85 becomes a diffusing and reflecting surface. The third reflecting surface 85 can reflect light from the second reflecting surface 82 forward as shown by arrows B and C in FIGS. 4 and 5 because the third reflecting surface 85 faces the second reflecting surface 82 and the front side.

Further, in the embodiment, a fourth reflecting surface 86 is adjacent to above the third reflecting surface 85.

The fourth reflecting surface 86 extends upward and rearward from an upper edge of the third reflecting surface 85 inside the lens 55. The fourth reflecting surface 86 faces upward and downward. Accordingly, the fourth reflecting surface 86 reflects external light such as solar light or the like radiated from above forward.

As shown in FIG. 5, the frame lower section 87 has a dummy reflecting surface 88 facing upward. The dummy reflecting surface 88 is provided inside the lens 55 (see FIG. 2). The dummy reflecting surface 88 is adjacent to the entire front edge of the first reflecting surface 72 and extends forward from the entire front edge of the first reflecting surface 72. The dummy reflecting surface 88 is formed to have a flat surface or a curved surface with a concave shape having a curvature larger than that of the high beam reflecting surface 72a and the low beam reflecting surfaces 72b. The dummy reflecting surface 88 is provided so as to be less inclined with respect to the horizontal direction than the high beam reflecting surface 72a and the low beam reflecting surfaces 72b. The dummy reflecting surface 88 becomes a diffusing and reflecting surface configured to diffuse and reflect light.

As described above, in the headlight 50 of the embodiment, the reflecting member 53 includes the reflector 70 that is provided in the radiation direction of the LED light source 60 with respect to the LED light source 60 and that has the first reflecting surface 72 configured to reflect the light radiated from the LED light source 60 toward outside, the second reflecting surface 82 that is provided in the radiation direction of the LED light source 60 with respect to the LED light source 60 and that is configured to reflect the light radiated from the LED light source 60, the second reflecting surface 82 being separately provided from the first reflecting surface 72, and the third reflecting surface 85 that faces a side opposite to the LED light source 60 and that is configured to reflect the light reflected by the second reflecting surface 82 toward outside. According to the configuration, the light leaked from the first reflecting surface 72 among the light radiated from the LED light source 60 can be reflected by the second reflecting surface 82 and can be radiated to the third reflecting surface 85. Accordingly, the third reflecting surface 85 not directly irradiated with light from the LED light source 60 is in a lit state without facing the LED light source 60. Accordingly, the headlight 50 can be lit to a wider range without installing a new light source. Accordingly, improvement in design of the headlight 50 and visibility from the outside can be achieved while minimizing an increase in component costs.

In addition, the second reflecting surface 82 faces the LED light source 60 and the third reflecting surface 85, and the third reflecting surface 85 faces the second reflecting surface 82 and the front side. According to the configuration, the second reflecting surface 82 can reflect the light from the LED light source 60 to the third reflecting surface 85, and the third reflecting surface 85 can reflect the light from the second reflecting surface 82 forward. Accordingly, it is possible to provide the headlight 50 that exhibits the above-mentioned effects.

In addition, the light source 61 for a high beam is disposed on a central section of the headlight 50 in the vehicle width direction, the light sources 62 for low beams are disposed further outward in the vehicle width direction than the light source 61 for a high beam, and the second reflecting surface 82 is disposed within the radiation range of the light radiated from the light sources 62 for low beams. According to the configuration, in comparison with the case in which the light source for a low beam is disposed further inward in the vehicle width direction than the light source for a high beam, the radiation range of the light sources 62 for low beams can be easily widen toward an outer side than the first reflecting surface 72.

For this reason, a degree of design freedom in installation of the second reflecting surface 82 can be improved. Further, since the third reflecting surface 85 is lit by the light of a low beam that is normally turned on, design of the headlight 50 and visibility from the outside can be improved always.

Further, the reflecting member 53 includes the extension 80 that is disposed around the reflector 70 and that has the second reflecting surface 82. According to the configuration, the light leaked from the reflector 70 can be reflected by the second reflecting surface 82. Accordingly, the third reflecting surface 85 can be lit without light distribution of the headlight 50 being influenced by reflection of the reflector 70.

In addition, the third reflecting surface 85 is provided in a range that overlaps the first reflecting surface 72 in the upward and downward direction when seen in a front view. According to the configuration, since the third reflecting surface 85 is provided in the vicinity of the light sources 62 for low beams, an increase in incidence angle and reflection angle when the light is reflected from the second reflecting surface 82 toward the third reflecting surface 85 can be minimized. Accordingly, the light radiated to the second reflecting surface 82 can be efficiently reflected toward the third reflecting surface 85. Accordingly, the third reflecting surface 85 can be strongly lit, and design of the headlight 50 and visibility from the outside can be improved.

In addition, the third reflecting surface 85 is a diffusing and reflecting surface configured to diffuse and reflect light. According to the configuration, in comparison with the case in which the third reflecting surface is a mirror surface configured to perform specular reflection of light, the third reflecting surface 85 can reflect the light from the second reflecting surface 82 to a wider range. Accordingly, visibility from the outside of the headlight 50 can be improved.

In addition, the headlight 50 further includes the top plate section 74 disposed between the light sources 62 for low beams and the first reflecting surface 72. The window sections 76 for low beams through which light radiated from the light sources 62 for low beams passes toward the first reflecting surface 72 is formed in the top plate section 74, and the notches 77 through which light radiated from the light sources 62 for low beams passes toward the second reflecting surface 82 is formed in the window sections 76 for low beams. According to the configuration, the light can be radiated to the second reflecting surface 82 by the notches 77 while the radiation range of the light radiated to the first reflecting surface 72 is defined by the window sections 76 for low beams. Accordingly, the third reflecting surface 85 can be reliably lit while minimizing direct irradiation of a road surface with the leaked light. Accordingly, it is possible to provide the headlight 50 in which the radiation range is appropriately set and improvement of design and visibility from the outside is achieved.

Further, the present invention is not limited to the above-mentioned embodiment described with reference to the accompanying drawings, and various variants are considered without departing from the technical scope.

For example, in the embodiment, while the second reflecting surface 82 is the diffusing and reflecting surface, there is no limitation thereto and the surface may be a mirror surface in which specular reflection is possible. In this case, a normal line of at least one arbitrary point in the second reflecting surface 82 is directed toward a direction which is between a direction oriented from the arbitrary point to the light sources 62 for low beams and a direction oriented from the arbitrary point to the third reflecting surface 85. Accordingly, the second reflecting surface 82 can reflect the light from the light sources 62 for low beams toward the third reflecting surface 85 at the arbitrary point.

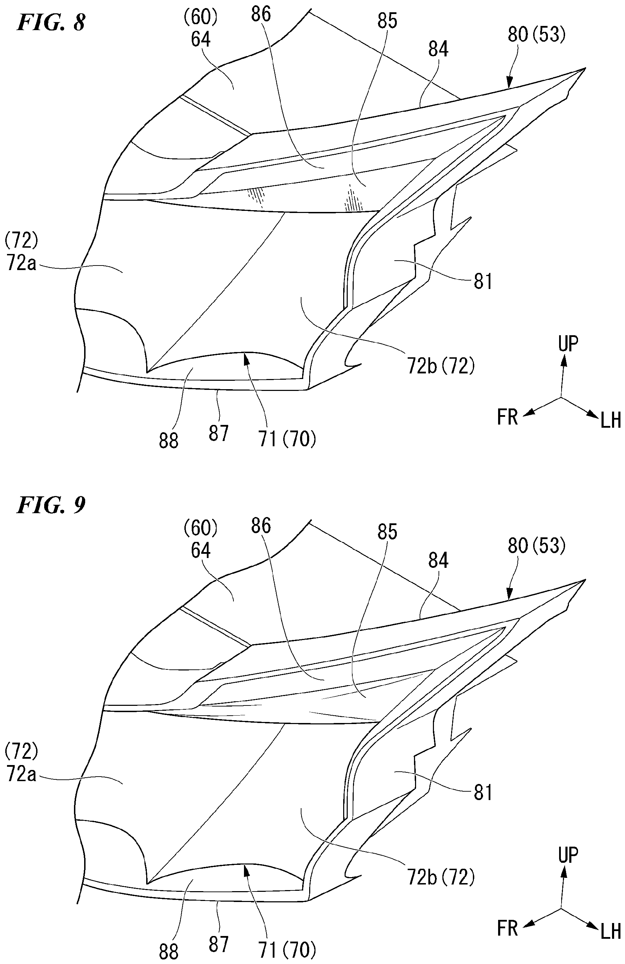

In addition, in the embodiment, while the third reflecting surface 85 is a curved surface having a convex shape, there is no limitation thereto. For example, as shown in FIG. 8, the third reflecting surface 85 may have a twisted shape. In this case, the third reflecting surface 85 may be twisted such that, for example, an inclination angle with respect to the forward and rearward direction is increased as it goes outward from an inner side in the vehicle width direction. In addition, as shown in FIG. 9, the third reflecting surface 85 may be a curved surface having a concave shape. According to the configurations, in comparison with the case in which the third reflecting surface is formed in a flat surface shape, the third reflecting surface 85 can reflect the light from the second reflecting surface 82 to a wider range. Accordingly, visibility from the outside of the headlight 50 can be improved.

In addition, in the embodiment, while the LED light source 60 is disposed to radiate light downward, there is no limitation thereto. For example, the LED light source may be disposed to radiate light inward in the vehicle width direction or may be disposed to radiate light upward.

In addition, in the embodiment, while the example in which the lighting device for a vehicle of the present invention is applied to the scooter type saddle riding vehicle has been exemplified, for example, the configuration of the embodiment may be assembled to a motorcycle, a motor tricycle, or the like, having no leg shield.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A lighting device for a vehicle comprising:
an LED light source (60) for a high beam and for a low beam;
a substrate (64) on which the LED light source (60) is mounted;
a reflecting member (53) configured to reflect light radiated from the LED light source (60), and
a light shielding section (74),
wherein the reflecting member (53) comprises:
a reflector (70) for a headlight that is provided in a radiation direction of the LED light source (60) with respect to the LED light source (60) and that has a first reflecting surface (72) configured to reflect light radiated from the LED light source (60) toward outside;
a second reflecting surface (82) that is provided in the radiation direction of the LED light source (60) with respect to the LED light source (60) and separately provided from the first reflecting surface (72); and
a third reflecting surface (85) that faces a side opposite to the LED light source (60) and that is configured to reflect light reflected by the second reflecting surface (82) toward outside,
**characterized in**
**that** the LED light source (60) includes a light source (61) for the high beam disposed at a central section of the LED light source (60) in a vehicle width direction when the lighting device is installed in a vehicle and a pair of light sources (62) for a low beam disposed at outer sides of the LED light source (60) in the vehicle width direction;
**that** the second reflecting surface (82) is configured to reflect light radiated from the pair of light sources (62) for a low beam;
**that** the light shielding section (74) is disposed between the LED light source (60) and the first reflecting surface (72),
**that** a window section (75) for a high beam through which light radiated from the light source (61) for a high beam passes toward the first reflecting surface (72) and a pair of window sections (76) for a low beam through which light radiated from the pair of light source (62) for a low beam passes toward the first reflecting surface (72) are formed in the light shielding section (74), and that a notch (77) through which light radiated from the pair of light sources (62) for a low beam passes toward the second reflecting surface (82) is formed in the pair of window section (76) for a low beam.

2. The lighting device for a vehicle according to claim 1,
wherein the second reflecting surface (82) faces the LED light source (60) and the third reflecting surface (85), and
the third reflecting surface (85) faces the second reflecting surface (82) and a front side.

3. The lighting device for a vehicle according to claim 1 or 2,
wherein the reflecting member (53) has an extension (80) that is disposed around the reflector (70) for a headlight and that has the second reflecting surface (82).

4. The lighting device for a vehicle according to any one of claims 1 to 3,
wherein the third reflecting surface (85) is provided in a range that overlaps the first reflecting surface (72) in an upward and downward direction when seen in a front view.

5. The lighting device for a vehicle according to any one of claims 1 to 4,
wherein the third reflecting surface (85) is a diffusing and reflecting surface configured to diffuse and reflect light.

6. The lighting device for a vehicle according to any one of claims 1 to 5,
wherein the third reflecting surface (85) has a twisted shape.

7. The lighting device for a vehicle according to any one of claims 1 to 5,
wherein the third reflecting surface (85) has a concave shape.

## Patentansprüche

1. Beleuchtungsvorrichtung für ein Fahrzeug, welche aufweist:
eine LED-Lichtquelle (60) für Fernlicht und für Abblendlicht;
ein Substrat (64), auf dem die LED-Lichtquelle (60) angebracht ist;
ein Reflektionselement (53), das konfiguriert ist, um von der LED-Lichtquelle (60) abgestrahltes Licht zu reflektieren, und
einen Lichtabschirmungsabschnitt (74),
wobei das Reflektionselement (53) aufweist:
einen Reflektor (70) für Fernlicht, der, in Bezug auf die LED-Lichtquelle (60), in Strahlungsrichtung der LED-Lichtquelle (60) vorgesehen ist, und der eine erste Reflektionsoberfläche (72) aufweist, die konfiguriert ist, um von der LED-Lichtquelle (60) abgestrahltes Licht zur Außenseite hin zu reflektieren;
eine zweite Reflektionsoberfläche (82), die in Bezug auf die LED-Lichtquelle (60) in der Strahlungsrichtung der LED-Lichtquelle (60) vorgesehen ist und von der ersten Reflektionsoberfläche (72) getrennt vorgesehen ist; und
eine dritte Reflektionsoberfläche (85), die zu einer der LED-Lichtquelle (60) gegenüberliegenden Seite weist, und die konfiguriert ist, um von der zweiten Reflektionsoberfläche (82) reflektiertes Licht zur Außenseite hin zu reflektieren,
**dadurch gekennzeichnet, dass** die LED-Lichtquelle (60) eine Lichtquelle (61) für Fernlicht enthält, die an einem in Fahrzeugbreitenrichtung mittigen Abschnitt der LED-Lichtquelle (60) angeordnet ist, wenn die Beleuchtungsvorrichtung in einem Fahrzeug installiert ist, sowie ein Paar von Lichtquellen (62) für Abblendlicht, die an in der
Fahrzeugbreitenrichtung äußeren Seiten der LED-Lichtquelle (60) angeordnet sind;
dass die zweite Reflektionsoberfläche (82) konfiguriert ist, um von dem Lichtquellen-Paar (62) für Abblendlicht abgestrahltes Licht zu reflektieren;
dass der Lichtabschirmungsabschnitt (74) zwischen der LED-Lichtquelle (60) und der ersten Reflektionsoberfläche (72) angeordnet ist,
dass ein Fensterabschnitt (75) für Fernlicht, durch den von der Lichtquelle (61) für Fernlicht abgestrahltes Licht zu der ersten Reflektionsoberfläche (72) hindurchtritt, sowie ein Paar von Fensterabschnitten (76) für Abblendlicht, durch die von dem Lichtquellen-Paar (62) für Abblendlicht abgestrahltes Licht, zu der ersten Reflektionsoberfläche (72) hindurchtritt, in dem Lichtabschirmungsabschnitt (74) ausgebildet sind,
und
dass eine Kerbe (77), durch die von dem Lichtquellen-Paar (62) für Abblendlicht abgestrahltes Licht zu der zweiten Reflektionsoberfläche (82) hindurchtritt, in dem Fensterabschnitt-Paar (76) für Abblendlicht ausgebildet ist.

2. Die Beleuchtungsvorrichtung für ein Fahrzeug nach Anspruch 1,
wobei die zweite Reflektionsoberfläche (82) zu der LED-Lichtquelle (60) und zu der dritten Reflektionsoberfläche (85) weist, und
die dritte Reflektionsoberfläche (85) zu der zweiten Reflektionsoberfläche (82) und zu einer Vorderseite weist.

3. Die Beleuchtungsvorrichtung für ein Fahrzeug nach Anspruch 1 oder 2,
wobei das Reflektionselement (53) eine Verlängerung (80) aufweist, die um den Reflektor (70) für Fernlicht herum angeordnet ist und die die zweite Reflektionsoberfläche (82) aufweist.

4. Die Beleuchtungsvorrichtung für ein Fahrzeug nach einem der Ansprüche 1 bis 3,
wobei die dritte Reflektionsoberfläche (85) in einem Bereich vorgesehen ist, der, bei Betrachtung in Vorderansicht, die erste Reflektionsoberfläche (72) in Richtung aufwärts und abwärts überlappt.

5. Die Beleuchtungsvorrichtung für ein Fahrzeug nach einem der Ansprüche 1 bis 4,
wobei die dritte Reflektionsoberfläche (85) eine streuende und reflektierende Oberfläche ist, die konfiguriert ist, um Licht zu streuen und zu reflektieren.

6. Die Beleuchtungsvorrichtung für ein Fahrzeug nach einem der Ansprüche 1 bis 5,
wobei die dritte Reflektionsoberfläche (85) eine verdrehte Form hat.

7. Die Beleuchtungsvorrichtung für ein Fahrzeug nach einem der Ansprüche 1 bis 5,
wobei die dritte Reflektionsoberfläche (85) eine konkave Form hat.

## Revendications

1. Dispositif d'éclairage pour un véhicule comprenant :
une source de lumière à DEL (60) pour un faisceau de route et pour un faisceau de croisement ;
un substrat (64) sur lequel est montée la source de lumière à DEL (60) ;
un organe réfléchissant (53) configuré pour réfléchir de la lumière rayonnée à partir de la source de lumière à DEL (60), et
une section pare-lumière (74),
dans lequel l'organe réfléchissant (53) comprend :
un réflecteur (70) pour un phare qui est prévu dans une direction de rayonnement de la source de lumière à DEL (60) par rapport à la source de lumière à DEL (60) et qui a une première surface réfléchissante (72) configurée pour réfléchir de la lumière rayonnée à partir de la source de lumière à DEL (60) vers l'extérieur ;
une deuxième surface réfléchissante (82) qui est prévue dans la direction de rayonnement de la source de lumière à DEL (60) par rapport à la source de lumière à DEL (60) et prévue séparément de la première surface réfléchissante (72) ; et
une troisième surface réfléchissante (85) qui fait face à un côté opposé à la source de lumière à DEL (60) et qui est configurée pour réfléchir de la lumière réfléchie par la deuxième surface réfléchissante (82) vers l'extérieur,
**caractérisé en ce que**
la source de lumière à DEL (60) comporte une source de lumière (61) pour le faisceau de route disposée au niveau d'une section centrale de la source de lumière à DEL (60) dans une direction de largeur de véhicule lorsque le dispositif d'éclairage est installé dans un véhicule et une paire de sources de lumière (62) pour un faisceau de croisement disposées au niveau de côtés externes de la source de lumière à DEL (60) dans la direction de largeur de véhicule ;
**en ce que** la deuxième surface réfléchissante (82) est configurée pour réfléchir de la lumière rayonnée à partir de la paire de sources de lumière (62) pour un faisceau de croisement ;
**en ce que** la section pare-lumière (74) est disposée entre la source de lumière à DEL (60) et la première surface réfléchissante (72),
**en ce qu'**une section de fenêtre (75) pour un faisceau de route à travers laquelle passe de la lumière rayonnée à partir de la source de lumière (61) pour un faisceau de route vers la première surface réfléchissante (72) et une paire de sections de fenêtre (76) pour un faisceau de croisement à travers lesquelles passe de la lumière rayonnée à partir de la paire de sources de lumière (62) pour un faisceau de croisement vers la première surface réfléchissante (72) sont formées dans la section pare-lumière (74),
et **en ce qu'**une encoche (77) à travers laquelle passe de la lumière rayonnée à partir de la paire de sources de lumière (62) pour un faisceau de croisement vers la deuxième surface réfléchissante (82) est formée dans la paire de sections de fenêtre (76) pour un faisceau de croisement.

2. Dispositif d'éclairage pour un véhicule selon la revendication 1,
dans lequel la deuxième surface réfléchissante (82) fait face à la source de lumière à DEL (60) et à la troisième surface réfléchissante (85), et
la troisième surface réfléchissante (85) fait face à la deuxième surface réfléchissante (82) et à un côté avant.

3. Dispositif d'éclairage pour un véhicule selon la revendication 1 ou 2,
dans lequel l'organe réfléchissant (53) a une extension (80) qui est disposée autour du réflecteur (70) pour un phare et qui a la deuxième surface réfléchissante (82).

4. Dispositif d'éclairage pour un véhicule selon l'une quelconque des revendications 1 à 3,
dans lequel la troisième surface réfléchissante (85) est prévue dans une plage qui chevauche la première surface réfléchissante (72) dans une direction vers le haut et vers le bas en vue de face.

5. Dispositif d'éclairage pour un véhicule selon l'une quelconque des revendications 1 à 4,
dans lequel la troisième surface réfléchissante (85) est une surface diffusante et réfléchissante configurée pour diffuser et réfléchir de la lumière.

6. Dispositif d'éclairage pour un véhicule selon l'une quelconque des revendications 1 à 5,
dans lequel la troisième surface réfléchissante (85) a une forme tordue.

7. Dispositif d'éclairage pour un véhicule selon l'une quelconque des revendications 1 à 5,
dans lequel la troisième surface réfléchissante (85) a une forme concave.
